# EUROPEAN PATENT APPLICATION

(11) **EP 2 204 375 A1**
(43) Date of publication of application: **07.07.2010**
(21) Application number: 08291195.9
(22) Date of filing: 12.12.2008
(51) Int. Cl.: C07F 17/00, C08F 10/00, C08F 4/76

(54) **Preparation of mono-aryl-substituted methylene-bridged substituted cyclopentadienyl-fluorenyl ligands and zirconium complexes derived thereof**

(71) Applicant: Total Petrochemicals Research Feluy, 7181 Seneffe (Feluy) (BE); Centre National pour la Recherche Scientifique (CNRS), 75016 Paris (FR)
(72) Inventor: Carpentier, Jean-Francois, 35690 Acigne (FR); Kirillov, Evgueni, 35042 Rennes (FR); Marquet, Nicolas, 35410 Domloup (FR); Razavi, Abbas, 7000 Mons (BE)
(74) Representative: Roufosse, Micheline C.

(57) **Abstract**

The present invention discloses efficient methods for preparing mono-aryl-substituted cyclopentadienyl-fluorenyl catalyst components and their use in the isotactic polymerisation of propylene with very high productivity.

## Description

The present invention relates to new methods for the preparation of metallocene catalyst components based on mono-phenyl-bridged substituted cyclopentadienyl-fluorenyl ligands.

It is possible to develop catalyst systems that are able to produce different types of polymer such as isotactic, syndiotactic or atactic. It is, however, desirable that the selected catalyst produces predominantly an isotactic or syndiotactic polymer with very little atactic polymer. C₂- or C₁-symmetric metallocene catalysts are known to produce isotactic polyolefins. For example, C₂-symmetric bis-indenyl type zirconocenes can produce high molecular weight, high melting temperature isotactic polypropylene. The preparation of this metallocene catalyst is, however, costly and time-consuming. Most importantly, the final catalyst consists of a mixture of racemic and meso isomers in an often unfavourable ratio. The meso stereoisomer has to be separated to avoid the formation of atactic polypropylene during the polymerisation reaction. As a result, the desired metallocene is obtained in an overall poor yield.

EP-A-0426644 relates to syndiotactic copolymers of olefins such as propylene obtainable using as a catalyst component isopropylidene-(fluorenyl)(cyclopentadienyl) zirconium dichloride. Syndiotacticity, as measured by the amount of syndiotactic pentads *rrrr*, was found to be 73-80%.

EP 747406 relates to the polymerisation of an olefin monomer to form a syndiotactic/isotactic block polyolefin, particularly a block polypropylene. A component of the polymerisation catalyst was a {3-trimethylsilyl-cyclopentadienyl}/{9-fluorenyl} zirconium or hafnium dichloride having an isopropylidene or diphenylmethylidene bridge.

EP-A-577581 discloses the production of syndiotactic polypropylenes using metallocene catalysts having fluorenyl groups substituted in positions 2 and 7 and an unsubstituted cyclopentadienyl ring.

EP-A-0419677 describes the production of syndiotactic polypropylene with an object to produce resin compositions having high stiffness when moulded. Metallocene catalysts such as isopropylidene-bridged (cyclopentadienyl-9-fluorenyl) zirconium dichloride were used in the production of polypropylene. However, the molecular weight, melting point and syndiotacticity of these products were relatively low.

EP 0881236 A1 relates to the preparation of isotactic polypropylene using C₁-symmetric zirconocenes incorporating isopropylidene-bridged (fluorenyl)(cyclopentadienyl) ligands having Me and *t*Bu substituents in 5 and 3 positions of a cyclopentadienyl ring, respectively, and an unsubstituted fluorenyl group.

Manufacturing of highly isotactic polypropylene using C₁-symmetric zirconocenes incorporating isopropylidene-bridged (fluorenyl)(cyclopentadienyl) ligands has also been reported in Abbas Razavi, Vincenzo Bellia, Yves De Brauwer, Kai Hortmann, Liliane Peters, Sabine Sirol, Stephan Van Belle and Ulf Thewalt, Macromol. Chem. Phys. 2004, 205, 347-356 and in A. Razavi, V. Bellia, D. Baekelmans, M. Slawinsky, S. Sirol, L. Peters, and Ulf Thewalt, Kinetics and Catalysis, 2006, 47, 257-267.

EP 1762577 A1 treats of the production of isotactic impact copolymer of propylene using isopropylidene-bridged (fluorenyl)(cyclopentadienyl) zirconium dichloride having Me and *t*Bu substituents in 5 and 3 positions of a cyclopentadienyl ring, respectively, and a 3,6-*t*Bu substituted fluorenyl group.

Many bridged cyclopentadienyl-fluorenyl components have been described in the literature but few have been prepared and most of the complexes formed are quite unstable.

There is a need to develop new catalyst systems capable of providing with high activity polymers with improved properties and efficient methods for preparing them.

It is an aim of the present invention to provide a method for efficiently preparing mono-phenyl-substituted methylene-bridged cyclopentadienyl-fluorenyl catalyst components.

It is also an aim of the present invention to isolate pure metallocene components with high yield.

It is also an aim of the present invention to use these catalyst components for the highly effective preparation of polymers having high molecular weight.

It is another aim of the present invention to use these catalyst components to prepare polymers having a high melting temperature.

It is a further aim of the present invention to use these catalyst components to prepare impact copolymers having improved impact properties.

Any one of those aims is, at least partially, fulfilled by the present invention.

Accordingly, the present invention provides a process for preparing a catalyst component of general formula

{R' (R^{b}₂-Flu) (R^{c}R^{d}C₅H₂)} MQ₂

wherein R' is a mono-aryl-substituted methylene bridge, preferably a mono-phenyl-substituted methylene bridge, wherein Flu is a 9-fluorenyl group, and wherein R^{b}, R^{c} and R^{d} are each independently selected from H or alkyl having from 1 to 12 carbon atoms or silyl groups substituted or unsubstituted
wherein M is a metal Group 4 of the Periodic Table and
wherein Q is halogen or alkyl having from 1 to 12 carbon atoms, and said process comprising:
a) reaction by nucleophilic addition, in a solvent, of the adequate (R^{a}₂CR^{c}R^{d}fulvene), wherein each R^{a} is independently selected from aromatic group, preferably a phenyl group, with the group [R^{b}₂-Flu ]⁻ [M']⁺ wherein M' is alkali metal such as Li, Na, K;
b) hydrolysis and separation of the resulting ligand;
c) deprotonation of the ligand of step b) with R"M" to prepare a dianion ligand,
   wherein R" is an alkyl having from 1 to 6 carbon atoms and M" is Li, Na or K;
d) salt metathesis reaction in a solvent of the dianion ligand of step d) with MQ₄
   wherein M is a metal group 4 of the Periodic Table and Q is halogen or alkyl or benzyl;
e) isolation of the mono-aryl-substituted methylene-bridged catalyst component by crystallisation.

The metallocene component of the present invention crystallises easily thus allowing the efficient high yield production of pure compounds. Typical yields obtained when producing the prior art metallocene components were of the order of 30 to 40, whereas the yields of the present invention are of at least 70%, preferably of at least 80%.

Throughout this description, the positions are labelled as represented below:

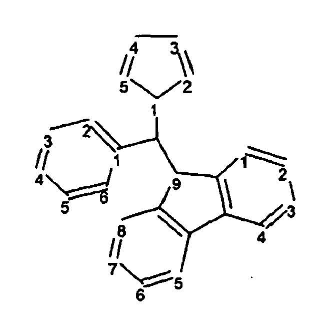

Preferably, both R^{b} are the same and are alkyl groups having from 1 to 12 carbon atoms, more preferably they both are *tert*-butyl. They are preferably located at positions 1 and 8 or 2 and 7 or 3 and 6. More preferably they are located at positions 3 and 6 and they are tert-butyl. In another preferred embodiment, the fluorenyl has the substitution pattern: 2,3,6,7-octamethyloctahydrodibenzofluorene (OMOHDD-FluH) represented by:

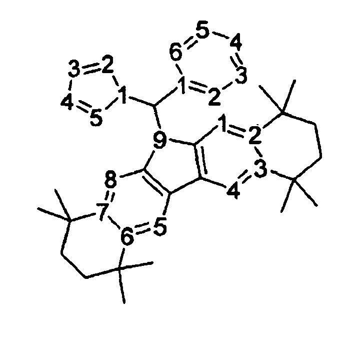

Preferably R^{c} is H or methyl or ethyl or isopropyl or phenyl, more preferably, it is ethyl.

Preferably R^{d} is alkyl having from 3 to 6 carbon atoms, more preferably, it is *tert*-butyl.

Preferably M is Zr, Hf or Ti, more preferably, it is Zr.

Preferably Q is a halogen or methyl, more preferably it is chlorine.

Preferably, M" is Li.

Any activating agent having an ionising action known in the art may be used for activating the metallocene component for polymerisation. For example, it can be selected from aluminium-containing or boron-containing compounds. The aluminium-containing compounds comprise aluminoxanes, alkyl aluminiums and/or Lewis acids.

The aluminoxanes are preferred and may comprise oligomeric linear and/or cyclic alkyl aluminoxanes represented by the formula: 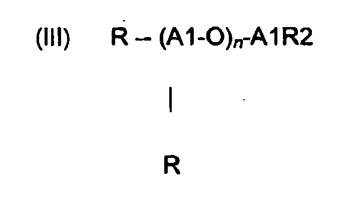 for oligomeric, linear aluminoxanes and 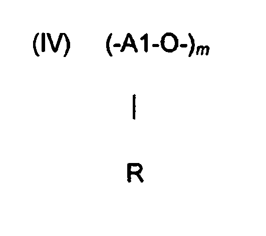 for oligomeric, cyclic aluminoxane,
wherein *n* is 1-40, preferably 10-20, m is 3-40, preferably 3-20 and R is a C₁-C₈ alkyl group and preferably methyl.

Suitable boron-containing activating agents can be used when Q is alkyl or benzyl. They comprise triphenylcarbenium boronates such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

The catalyst system can also be supported. The support if present can be a porous mineral oxide, advantageously selected from silica, alumina and mixtures thereof.
Preferably, it is silica.

Alternatively, a fluorinated activating support can be used.

The catalyst system of the present invention can be used in the polymerisation of ethylene and alpha-olefins. It is preferably used to prepare highly isotactic propylene homopolymers having a high weight average molecular weight of at least 500 kDa, preferably at least 700 kDa, a high melting temperature of more than 150°C, preferably of more than 160 °C.

It can also be used to prepare ethylene-propylene rubber (EPR) having an ethylene content of from 8 to 15 wt%, a high weight average molecular weight of at least 500 kDa, preferably at least 700 kDa, and a melt flow index MFI of from 2 to 10 dg/min. The melt flow index is measured following the method of standard test ASTM D 1238 under a load of 2.16 kg and at a temperature of 230 °C. The EPR obtained in the present invention is characterised by excellent impact properties. It can be used in all applications that require elastomers with excellent thermoplastic properties.

### List of Figures.

Figure 1 represents the ¹H NMR spectrum of *anti*-[Ph(H)C(3-tBu-5-Et-Cp)(3,6-*t*Bu₂Flu)]ZrCl₂.
Figure 2 represents the X-ray crystallography of *anti*-[Ph(H)C(3-*t*Bu-5-Et-Cp)(3,6-*t*Bu₂Flu)]ZrCl₂.
Figure 3 represents the ¹H NMR spectrum of *anti*-[Ph(H)C(3-tBu-5-Ph-Cp)(3,6-*t*Bu₂Flu)JZrCl₂.
Figure 4 represents the X-ray crystallography of *anti*-[Ph(H)C(3-*t*Bu-5-Ph-Cp)(3,6-*t*Bu₂Flu)]ZrCl₂.
Figure 5 represents the ¹H NMR spectrum of *anti*-[Ph(H)C(3-*t*Bu-5-Me-Cp)(2,7-*t*Bu₂Flu)]ZrCl₂.
Figure 6 represents the X-ray crystallography of *anti*-[Ph(H)C(3-*t*Bu-5-Me-Cp)(2,7-*t*B_{U2}Flu)]ZrCl₂.

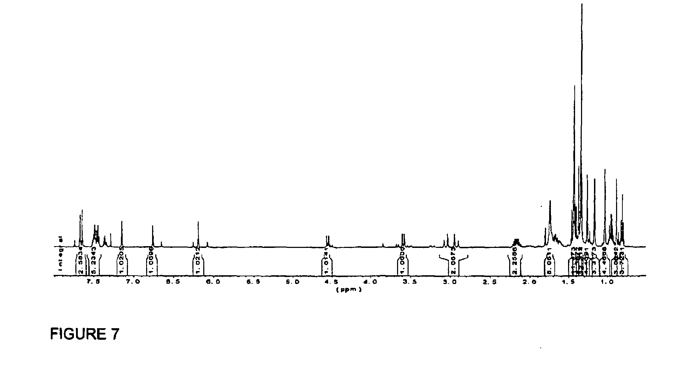

Figure 7 represents the ¹H NMR spectrum of pro-ligand Ph(H)C(3-*t*Bu-5-Et-CpH)(OMOHDD-FluH)].

### Examples.

### Polymerization Results

**Ref** = [Me₂C(3-*t*Bu-5-Me-Cp)(3,6-*t*Bu₂Flu)]ZrCl₂

**Cat1** = *anti*-[Ph(H)C(3-*t*Bu-5-Me-Cp)(3,6-*t*Bu₂Flu)]ZrCl₂

**Cat2** = *anti*-[Ph(H)C(3-*t*Bu-5-Et-Cp)(3,6-*t*Bu₂Flu)]ZrCl₂

**Cat3** = *anti*-[Ph(H)C(3-*t*Bu-5-Ph-Cp)(3,6-*t*Bu₂Flu)]ZrCl₂

**Cat4** = *anti*-[Ph(H)C(3-*t*Bu-5-Me-Cp)(2,7-*t*Bu₂Flu)]ZrCl₂

### Preparation of catalyst components.

### Synthesis of ethylcyclopentadiene.

Ethylcyclopentadiene was prepared using a procedure published by Riemschneider et al (Riemschneider R., Reichelt E., Grabitz E.B. in Monatsh. Chem., 1960, 91, 812-823) or diethylcyclopentadiene was purchased from 3B Scientific Corporation USA or from Lianyungang Henrychem Science Co., Ltd. China .^{1,2} A 1 L round bottom flask, equipped with magnetic stirring bar and argon inlet, was charged with 25 g (1029 mmol) of magnesium metal tunings and 500 mL of Et₂O. 84 mL (1126 mmol) of ethyl bromide in 100 mL of Et₂O were added dropwise over a period of time of 3 h. The reaction mixture was refluxed for 1 h and magnesium metal completely dissolved. Under rigorous stirring 75 mL (919 mmol) of freshly distilled cyclopentadiene were added dropwise at room temperature (about 25 °C) over a period of time of 1 h and the resultant greenish suspension was refluxed overnight. The reaction mixture was maintained at a temperature of 0 °C and 147 mL (1126 mmol) of diethyl sulfate were added dropwise to result in formation of grey precipitate. After 4-5 h of stirring at room temperature the resultant suspension was carefully diluted with 1 L of a saturated solution of NH₄Cl in water. The organic layer was separated, dried over Na₂SO₄ and concentrated. The residue was purified by distillation under vacuum (80 mbar pressure) at a temperature of 35-38 °C to give 36,4 g of pure ethylcyclopentadiene with a yield of 41 %, as a mixture of isomers.

### Synthesis of 1-tert-butyl-3-othyl-cyclopentadione, mixture of isomers.

1) In a round bottom flask, equipped with magnetic stirring bar and argon inlet, were placed 500 mL of methanol, 36.4 g (479 mmol) of freshly cracked ethylcyclopentadiene and 35.2 mL (479 mmol) of acetone. 39.3 mL (479 mmol) of pyrrolidine were added dropewise over a period of time of 2 h. The reaction mixture was stirred at room temperature for 72 hours. After neutralisation with 27.4 mL of CH₃COOH methanol was evaporated, and 1 L of water (1 L) and 250 mL of Et₂O were added. The organic layer was separated, dried over MgSO₄ and evaporated. The resultant orange liquid was purified by distillation at a temperature of 65 °C and under a pressure of 7 mbar to give 42 g (313 mmol) of 6,6'-dimethyl-3-ethyl-fulvene with a yield of 82 %.
   ¹H NMR (CDCl₃, 200 MHz, 25 °C): δ 6.54 (m, 1H), 6.41 (m, 1H), 6.21 (m, 1H), 2.45 (q, ³*J* = 7.5 Hz, 2H, C*H*₂CH₃), 2.18 (s, 6H, CH₃), 1.21 (t, ³*J* = 7.5 Hz, 2H, CH₂C*H*₃).
   Anal. Calcd for C₁₀H₁₄: C, 89.49; H, 10.51. Found: C, 90.05; H, 11.12.
2) 21 g (157 mmol) of 6,6'-dimethyl-3-ethyl-fulvene were placed in 1 L flask and 300 mL of Et₂O were added. To the solution 100 mL (160 mmol) of a 1.6 M solution of methyllithium were added dropwise at a temperature of 0 °C. The reaction was completed after a few hours. The reaction mixture was carefully hydrolysed with a saturated solution of NH₄Cl in water. The organic layer was separated, dried over MgSO₄ and evaporated. The resultant orange liquid was purified by distillation at a temperature of 60 °C and under a pressure of 9 mbar to give 22.3 g (148 mmol) of 1-*tert*-butyl-3-ethyl-cyclopentadiene with a yield of 95 %, as a mixture of isomers.
   ¹H NMR (CDCl₃, 200 MHz, 25 °C): δ 6.30-5.70 (m, 2H), 3.00-2.80 (m, 2H), 2.50-2.20 (m, 2H, C*H*₂CH₃), 1.30-1.10 (m, 12H, C(CH₃)₂ + CH₂C*H*₃).
   Anal. Calcd for C₁₁H₁₈: C, 87.93; H, 12.07. Found: C, 88.12; H, 12.54.

### Synthesis of 6-phenyl-2-ethyl-4-tert-butyl-fulvene.

To a solution of 5 g (33.28 mmol) of a mixture of isomers of 1-ethyl-3-*tert*-butyl-cyclopentadiene in 50 mL of THF were added 15.1 mL (33.28 mmol) of a 2.2 M solution of *n*-butyllithium in hexane at a temperature of 0 °C. The reaction mixture was stirred for 4 hours and a solution of 3.4 mL (33.28 mmol) of benzaldehyde in 30 mL of THF was added dropwise. The reaction mixture became orange. After 2 hours, 50 mL of a concentrated solution of NH₄Cl were added slowly. This mixture was stirred overnight. The organic layer was separated, dried over MgSO₄ and all the volatiles were removed in vacuum. 7.46 g (31.28 mmol) of a red oily residue were obtained with a yield of 94 % and were dried overnight under vacuum.
¹H NMR (CDCl₃, 500 MHz, 25 °C): δ7.57 (m, 2H), 7.46-7.39 (m, 4H), 7.35 (m, 1H), 7.08 (s, 1H, =C*H*Ph), 6.27 (m, 1H, *CH*), 6.19 (m, 1H, C*H*), 2.59 (q, ³*J* = 7.5 Hz, 2H, C*H*₂CH₃), 1.23 (s, 9H, CC*H*₃), 1.19 (t, ³*J* = 7.5 Hz, 2H, CH₂C*H*₃).
Anal. Calcd for C₁₈H₂₂: C, 90.70; H, 9.30. Found: C, 92.05; H, 10.15.

### Synthesis of Ph(H)C(3,6-tBu₂-FluH)(3-tBu-5-Et-CpH), mixture of isomers.

To a solution of 3.92 g (16.45 mmol) of 6-phenyl-2-ethyl-4-*tert*-butyl-fulvene in 40 mL of THF were added at room temperature 40 mL of a solution of 3,5-di-*tert*-butyl-fluorenyl-lithium prepared from 4.4 g (15.8 mmol) of 3,6-di-*tert*-butyl-fluorene and 7.2 mL (15.8 mmol) of a 2.2 M solution of *n*-butyllithium. The reaction mixture was stirred overnight at ambient temperature and then quenched with 50 mL of saturated solution of NH₄Cl and diluted with 50 mL of diethyl ether. The organic layer was separated, washed twice with 200 mL of with water and dried over MgSO₄. All the volatiles were removed in vacuum and the residue was recrystallised from MeOH to give 5.9 g (11.42 mmol) of the final product with a yield of 73 %. It was a mixture of isomers in a ratio of about 7:50.
¹H NMR (CDCl₃, 500 MHz, 25 °C) (only the spectrum of major isomer is given): δ 7.79 (m, 2H), 7.50-7.40 (m, 4H), 7.33 (m, 1H), 7.15 (m, 1H), 7.10 (m, 1H), 6.90 (d, ³*J* = 8.1 Hz, 1H), 6.45 (s, 1H), 6.34 (d, ³*J* = 8.1 Hz, 1H), 4.56 (d, ³*J* = 10.7 Hz, 1H), 3.70 (d, ³*J* = 10.7 Hz, 1H), 2.90 (m, 2H), 2.08 (q, ³*J* = 7.5 Hz, 2H, C*H*₂CH₃), 1.43 (s, 9H, CC*H*₃-Flu), 1.40 (s, 9H, CC*H*₃-Flu), 1.25 (s, 9H, CC*H*₃-Cp), 0.74 (q, ³*J* = 7.5 Hz, 2H, CH₂C*H*₃).
¹³C NMR (CDCl₃, 125 MHz, 25 °C) (only the spectrum of major isomer is given): δ 155.9, 149.9, 149.8, 144.2, 143.9, 143.5, 141.1, 140.8, 139.2, 128.9, 128.6, 126.3, 125.8, 125.2, 124.5, 123.4, 123.3, 115.9,115.7, 50.0, 48.3, 41.0, 34.8, 33.2, 31.7, 31.0, 20.9, 14.4.
Anal. Calcd for C₃₉H₄₈: C, 90.64; H, 9.36. Found: C, 90.99; H, 9.45.

### Synthesis of complex Ph(H)C(3,6-tBu₂Flu)(3-tBu-5-Et-Cp)ZrCl₂ (III).

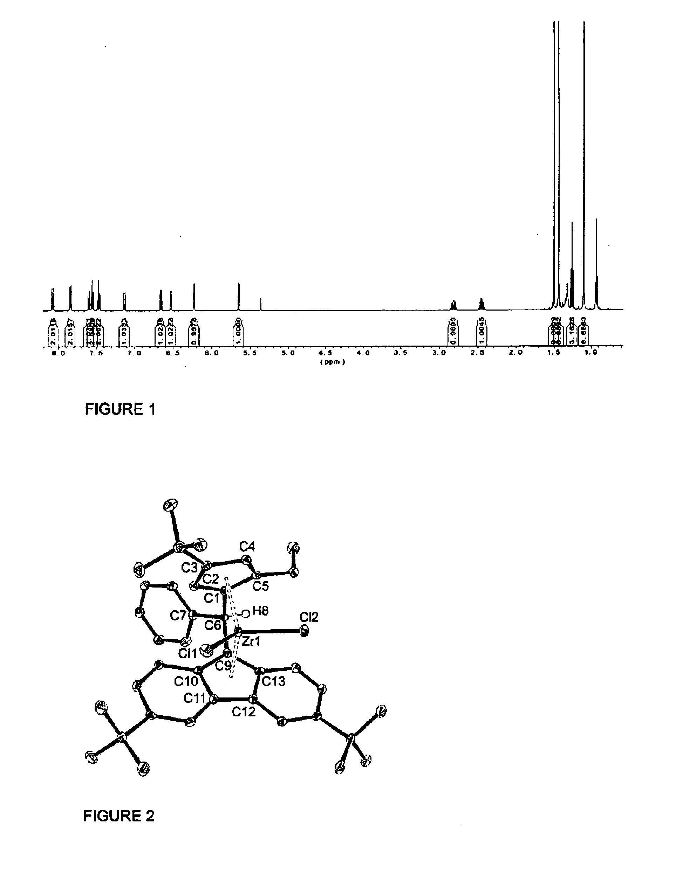

To a solution of 1.530 g (2.96 mmol) of pro-ligand Ph(H)C(3,6-*t*Bu₂FluH)(3-*t*Bu-5-Et-CpH) in 40 mL of Et₂O were added 2.7 mL (5.92 mmol) of a 2.2 M solution of *n-*butyllithium in hexane at a temperature of 0 °C. The reaction mixture was stirred overnight at room temperature and then all the volatiles were removed under reduced pressure. Then in a glovebox 0.690 g (2.96 mmol) of anhydrous ZrCl₄ were added followed by addition of 50 mL of Et₂O. The resulting pink reaction mixture was stirred at room temperature overnight. The solvent was evaporated in vacuum and 40 mL of hexane were added. The resulting solution was filtered off and the filtrate was evaporated to give 1.96 g (2.90 mmol) of red solid of Ph(H)C(3,6-*t*Bu₂Flu)(3-*t*Bu-5-Et-Cp)ZrCl₂ with a yield of 98 %. Only one diastereomer out of two possible was obtained (500 MHz ¹H NMR spectroscopy). The latter material was recrystallised from 15 mL of hexane at a temperature of -50 °C. The crystals suitable for X-ray were obtained by slow concentration of hexane solution. ¹H NMR (CD₂Cl₂, 500 MHz, 25 °C) is represented in Figure 1: δ 8.07 (m, 2H), 7.84 (m, 2H), 7.60 (m, 1H), 7.55 (m, 2H), 7.47 (m, 2H), 7.12 (m, 1H), 6.45 (m, 1H), 6.53 (s, 1H, Ph*H*C), 6.22 (d, ⁴*J* = 2.8 Hz, Cp), 5.65 (d, ⁴*J* = 2.8 Hz, Cp), 2.81 (sxt, ³*J* = 7.5 Hz, C*H*HCH₃), 2.45 (sxt, ³*J* = 7.5 Hz, CH*H*CH₃), 1.50 (s, 9H, CC*H*₃-Flu), 1.43 (s, 9H, CC*H*₃-Flu), 1.25 (t, ³*J* = 7.5 Hz, CH₂C*H*₃), 1.09 (s, 9H, CC*H*₃-Cp). ¹³C NMR (CD₂Cl₂, 125 MHz, 25°C): δ 149.7, 146.8, 139.9, 132.8, 128.8, 128.5, 128.0, 127.9, 127.2, 126.3, 125.1, 124.6, 122.5, 122.3, 121.2, 119.6, 119.1, 118.8, 114.5, 102.2, 101.1, 74.3, 39.9, 35.1, 35.0, 32.9, 31.7, 31.6, 29.3, 22.6, 16.5.
Anal. Calcd for C₃₉H₄₆Cl₂Zr: C, 69.20; H, 6.85; Cl, 10.70. Found: C, 70.10; H, 7.54.
X-ray crystallography of complex Ph(H)C(3,6-*t*Bu₂Flu)(3-*t*Bu-5-Et-Cp)ZrCl₂ is represented in Figure 2.

### Synthesis of 1-tert-butyl-3-phenyl-cyclopentadiene (mixture of isomers).

In a round bottom flask, equipped with magnetic stirring bar and argon inlet, were placed 17.7 g (111.88 mmol) of 3-phenylcyclopent-2-en-1-one prepared as described in Riemschneider and Nerin (Riemschneider R., Nerin R. in Monatsh. Chem., 1960 91, 829-835) and 300 mL of THF. Then, 77 mL (123.2 mmol) of a 1.6 M solution of *tert-*butyllithium in pentane were added dropwise at a temperature of -100 °C over a period of time of one hour. The reaction mixture was allowed to warm up to room temperature over 3 hours, and then, was carefully hydrolyzed with 500 mL of water. 30 mL of concentrated HCl were added slowly and the reaction mixture was stirred overnight. 100 mL of Et₂O were added, the organic layer was separated, washed with a concentrated solution of Na₂CO₃ and dried over MgSO₄. The solvent was evaporated and the resultant oily product was purified by distillation at a temperature of 106-120 °C and under a pressure of 2·10⁻² Torr to give 2.66 g (13.41 mmol) of 1-*tert*-butyl-3-phenyl-cyclopentadiene with a yield of 12 %, as mixture of isomers.
¹H NMR (CDCl₃, 300 MHz, 25 °C): δ 7.70-7.20 (m, 5H, Ph), 6.70-6.00 (1H, =C*H*), 3.37 (m, 2H, -CH₂), 1.24 (m, 9H, CC*H*₃).
Anal. Calcd for C₁₅H₁₈: C, 90.85; H, 9.15. Found: C, 92.12; H, 10.34.

### Synthesis of 6-phenyl-2-phenyl-4-tert-butyl-fulvene.

To a solution of 2.66 g (13.41 mmol) of 1-*tert*-butyl-3-phenyl-cyclopentadiene (mixture of isomers) in 50 mL of THF were added 6.1 mL (13.41 mmol) of a 2.2 M solution of *n-*butyllithium in hexane at a temperature of 0 °C. The reaction mixture was stirred for 4 hours and a solution of 1.4 mL (13.41 mmol) of benzaldehyde in 20 mL of THF was added dropwise. The reaction mixture became orange. After 5 hours, 50 mL of a concentrated solution of NH₄Cl were added slowly. This mixture was stirred overnight. The organic layer was separated, dried over MgSO₄ and all the volatiles were removed in vacuum. The red oily residue of compound 6-phenyl-2-phenyl-4-*tert*-butyl-fulvene was recrystallised from 20 mL of methanol at a temperature of -20 °C and dried overnight under vacuum. 3.02 g (10.54 mmol) were obtained with a yield of 79 % yield.
¹H NMR (CDCl₃, 200 MHz, 25 °C): δ 7.70-7.30 (m, 10H, Ph), 7.19 (s, 1H, =C*H*Ph), 6.67 (m, 1H, C*H*), 6.45 (m, 1H, C*H*), 1.30 (s, 9H, CC*H*₃).
Anal. Calcd for C₂₂H₂₂: C, 92.26; H, 7.74. Found: C, 92.79; H, 8.55.

### Synthesis of Ph(H)C(3,6-tBu₂-FluH)(3-tBu-5-Ph-CpH) (mixture of isomers).

To a solution of 3.02 g (10.54 mmol) of 6-phenyl-2-phenyl-4-*tert*-butyl-fulvene in 40 mL of THF were added, at room temperature, 40 mL of a solution of 3,6-di-*tert*-butylfluorenyl-lithium prepared from 2.92 g (10.54 mmol) of 3,6-di-*tert*-butyl-fluorene and 4.8 mL (10.54 mmol) of a 2.2 M solution of *n*-butyllithium. The reaction mixture was stirred overnight at ambient temperature and then quenched with 50 mL of a saturated solution of NH₄Cl and diluted with 50 mL of diethyl ether. The organic layer was separated, washed twice with 200 mL of water and dried over MgSO₄. All the volatiles were removed under vacuum and the residue was recrystallised from MeOH to give 4.08 g (7.22 mmol) of the final product with a yield of 69 % yield. It was a mixture of isomers in a 1:10 ratio.
¹H NMR (CDCl₃, 500 MHz, 25 °C) (only the spectrum of major isomer is given): δ 7.75 (d, ⁴*J* = 1.7 Hz, 1H), 7.69 (d, ⁴*J* = 1.7 Hz, 1H), 7.50-7.40 (m, 4H), 7.36 (m, 1H), 7.21-7.11 (m, 4H), 6.96 (m, 1H), 6.88-6.81 (m, 3H), 6.32 (d, ³*J* = 8.2 Hz, 1H), 6.17 (s, 1H), 4.57 (d, ³*J* = 9.4 Hz, 1H), 4.20 (d, ³*J* = 9.4 Hz, 1H), 3.14 (m, 2H), 1.42 (s, 9H, CC*H*₃-Flu), 1.37 (s, 9H, CC*H*₃-Flu), 1.17 (s, 9H, CC*H*₃-Cp).
¹³C NMR (CDCl₃, 125 MHz, 25 °C) (only the spectrum of major isomer is given): δ 157.4, 150.2, 149.7, 143.6, 143.5, 143.2, 141.7, 141.2, 141.1, 139.4, 137.9, 128.9, 128.8, 128.6, 128.3, 128.2, 128.0, 127.9, 126.5, 125.8, 125.5, 125.4, 125.0, 123.4, 123.3, 115.9, 115.7, 50.6, 47.8, 43.0, 34.8, 34.7, 33.2, 31.7, 31.6, 30.7.
Anal. Calcd for C₄₃H₄₈: C, 91.43; H, 8.57. Found: C, 91.18; H, 9.43.

### Synthesis of complex Ph(H)C(3,6-^{t}Bu₂Flu)(3-^{t}Bu-5-Ph-Cp)ZrCl₂ (IV).

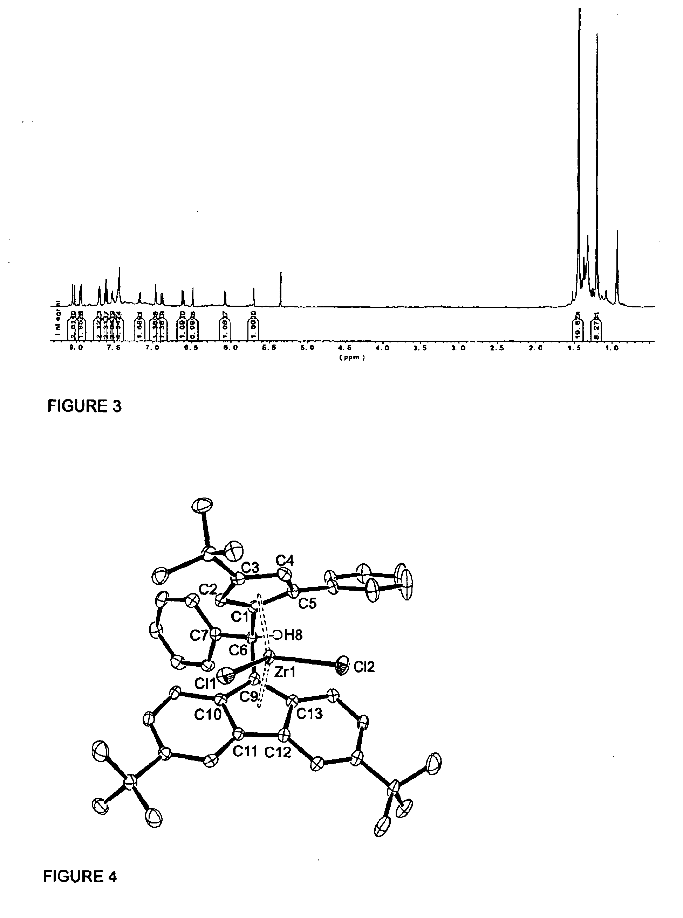

To a solution of 1.54 g (2.73 mmol) of pro-ligand Ph(H)C(3,6-*t*Bu₂-FluH)(3-*t*Bu-5-Ph-CpH) (1.540 g, 2.73 mmol) in 40 mL of Et₂O were added 2.5 mL (5.46 mmol) of a 2.2 M solution of *n*-butyllithium in hexane at a temperature of 0 °C. The reaction mixture was stirred overnight at room temperature and then all the volatiles were removed under reduced pressure. Then in glovebox 0.640 g (2.73 mmol) of anhydrous ZrCl₄ were added followed by addition of 30 mL of Et₂O. The resulting pink reaction mixture was stirred at room temperature overnight. The solvent was evaporated under vacuum and 40 mL of hexane were added. The resulting solution was filtered off and the filtrate was evaporated to give 1.88 g (2.59 mmol) of red solid of Ph(H)C(3,6-*^{t}*Bu₂Flu)(3-*^{t}*Bu-5-Ph-Cp)ZrCl₂ with a yield of 95 %. Only one diastereomer out of two possible was obtained (500 MHz ¹H NMR spectroscopy). The latter material was recrystallised from 15 mL of hexane at a temperature of -50 °C. Crystals suitable for X-ray were obtained by slow concentration of benzene solution.
¹H NMR (CD₂Cl₂, 500 MHz, 25 °C) is represented in Figure 3: δ 8.03 (m, 2H), 8.0 (m, 2H), 7.69 (m, 2H), 7.61 (m, 2H), 7.52 (m, 1H), 7.43 (m, 3H), 7.17 (m, 1H), 6.96 (s, 1H, PhHC), 6.88 (m, 1H), 6.61 (m, 1H), 6.49 (d, ⁴*J* = 2.8 Hz, Cp), 6.07 (d, ³*J* = 8.9 Hz), 5.70 (d, ⁴*J* = 2.8 Hz, Cp), 1.45 (s, 9H, CC*H*₃-Flu), 1.43 (s, 9H, CC*H*₃-Flu), 1.20 (s, 9H, CC*H*₃-Cp).
¹³C NMR (CD₂Cl₂, 125 MHz, 25 °C): δ 150.6, 150.2, 146.36139.4, 134.6, 129.0, 128.9, 128.5, 128.4, 128.0, 127.7, 127.6, 127.3, 127.0, 124.4, 122.7, 122.4, 122.3, 121.0, 119.9, 119.2, 118.9, 116.1, 102.5, 100.2, 74.5, 40.7, 35.0, 34.9, 33.2, 31.6, 31.5, 29.7. Anal. Calcd for C₄₃H₄₆Cl₂Zr: C, 71.24; H, 6.40; Cl, 10.70. Found: C, 71.76; H, 7.03.
X-ray crystallography of anti-Ph(H)C(3,6-*^{t}*Bu₂Flu)(3-*^{t}*Bu-5-Ph-Cp)ZrCl₂ is represented in Figure 4.

### Synthesis of Ph(H)C(2,7-tBu₂-FluH)(3-tBu-5-Me-CpH) (mixture of isomers).

To a solution of 2.64 g (11.7 mmol) of 6-phenyl-2-methyl-4-*tert*-butyl-fulvene in 40 mL of THF were added, at room temperature, 40 mL of solution of 2,7-di-*tert*-butyl-fluorenyl-lithium prepared from 3.27 g (11.77 mmol) of 2,7-di-*tert*-butyl-fluorene and 5.34 mL (11.77 mmol) of a 2.2 M solution of *n*-butyllithium. The reaction mixture was stirred overnight at ambient temperature and then quenched with 50 mL of a saturated solution of NH₄Cl and diluted with 50 mL of diethyl ether. The organic layer was separated, washed twice with 200 mL of water and dried over MgSO₄. All the volatiles were removed under vacuum and the residue was recrystallised from MeOH to give3.42 g (6.8 mmol) of the final product with a yield of 58 %. It was a mixture of isomers in a ratio of about 6:50.
¹H NMR (CDCl₃, 500 MHz, 25 °C) (only the spectrum of major isomer is given): δ 7.61 (t, ³*J* = 7.7 Hz, 2H), 7.47-7.38 (m, 4H), 7.36-7.29 (m, 3H), 7.18 (m, 1H), 6.63 (s, 1H), 6.35 (m, 1H), 4.54 (d, ³*J* = 11.1 Hz, 1H), 3.55 (d, ³*J* = 11.1 Hz, 1H), 2.91 (m, 2H), 1.65 (s, 3H, C*H*₃), 1.26 (s, 9H, CC*H*₃-Flu), 1.25 (s, 9H, CC*H*₃-Flu), 1.08 (s, 9H, CC*H*₃-Cp). ¹³C NMR (CDCl₃, 125 MHz, 25 °C) (only the spectrum of major isomer is given): δ 156.0, 148.8, 148.5, 146.0, 145.9, 144.3, 139.9, 138.5, 138.3, 134.4, 128.9, 128.6, 126.4, 124.6, 123.8, 123.7, 123.6, 123.4, 123.3, 118.5, 118.4, 50.6, 49.1, 44.2, 34.8, 34.7, 34.5, 33.2, 33.1, 31.6, 31.1, 30.9, 13.2.
Anal. Calcd for C₃₈H₄₆: C, 90.78; H, 9.22. Found: C, 91.15; H, 9.89.

### Synthesis of complex Ph(H)C(2,7-tBu₂Flu)(3-tBu-5-Me-Cp)ZrCl₂ (V).

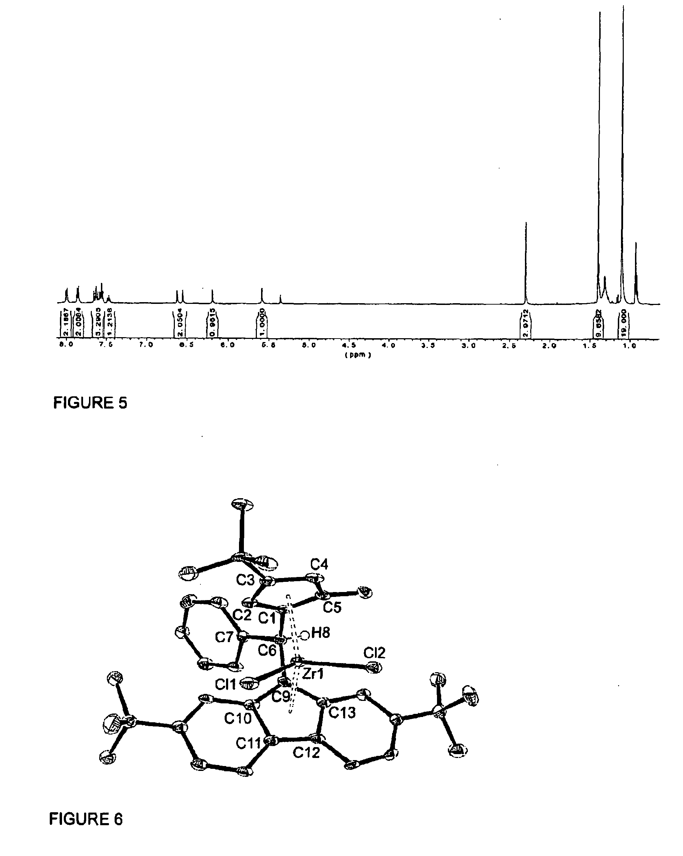

To a solution of 1.5 g (2.98 mmol) of pro-ligand Ph(H)C(2,7-*t*Bu₂-FluH)(3-*t*Bu-5-Me-CpH) in 40 mL of Et₂O were added 2.71 mL (5.96 mmol) of a 2.2 M solution of *n-*butyllithium in hexane at a temperature of 0 °C. The reaction mixture was stirred overnight at room temperature and then all the volatiles were removed under reduced pressure. Then in glovebox 0.695 g (2.98 mmol) of anhydrous ZrCl₄ were added followed by addition of 50 mL of Et₂O. The resulting pink reaction mixture was stirred at room temperature overnight. The solvent was evaporated under vacuum and 40 mL of hexane were added. The resulting solution was filtered off and the filtrate was concentrated to give 1.96 g (2.9 mmol) of red-orange microcrystalline solid of mostly one *anti-*Ph,Me diastereomer of Ph(H)C(2,7-*t*Bu₂Flu)(3-*t*Bu-5-Me-Cp)ZrCl₂ (97 % as judged by 500 MHz ¹H NMR spectroscopy) with a yield of 98%. The latter material was obtained diastereomerically pure by recrystallisation from hexane. Crystals suitable for X-ray were obtained by slow concentration of a concentrated hexane solution of the complex.
¹H NMR (CD₂Cl₂, 500 MHz, 25 °C) is represented in Figure 5: δ 8.00 (m, 1H), 7.86 (m, 1H), 7.67-7.54 (m, 5H), 7.47 (m, 1H), 6.62 (s, 1H), 6.56 (m, 1H), 6.20 (d, ⁴*J* = 2.8 Hz, Cp), 5.58 (d, ⁴*J* = 2.8 Hz, Cp), 2.31 (s, 3H, C*H*₃), 1.41 (s, 9H, CC*H*₃-Cp), 1.11 (s, 9H, CC*H*₃-Flu), 1.10 (s, 9H, CC*H*₃-Flu). ¹³C NMR (CD₂Cl₂, 125 MHz, 25°C): δ 151.3, 149.6, 146.7, 139.6, 128.8, 128.1, 127.2, 126.5, 125.3, 124.5, 124.0, 123.9, 123.7, 122.5, 120.9, 119.0, 118.3, 118.2, 116.9, 102.5, 100.4, 74.4, 39.6, 35.2, 34.7, 32.9, 31.6, 30.7, 30.3, 15.7.
Anal. Calcd for C₃₉H₄₆Cl₂Zr: C, 68.85; H, 6.69. Found: C, 69.14; H, 7.45.
X-ray crystallography of anti-PH(H)C(2,7-*t*Bu₂Flu)(3-*t*Bu-5-Me-Cp)ZrCl₂ is represented in Figure 6.

### Synthesis of Ph(H)C(OMOHDD-FluH)(3-tBu-5-Et-CpH) (mixture of isomers).

To a solution of 2.68 mg (11.22 mmol) of 6-phenyl-2-ethyl-4-*tert*-butyl-fulvene in 40 mL of THF were added, at room temperature, 100 mL of solution of octamethyloctahydrodibenzo-fluorenyl-lithium prepared from 4.3 g (11.12 mmol) of octamethyloctahydrodibenzo-fluorene and 5.1 mL (11.12 mmol) of a 2.2 M solution of *n-*butyllithium. The reaction mixture was stirred over 120 h at a temperature of 60 °C and then quenched with 50 mL of a saturated solution of NH₄Cl and diluted with 50 mL of diethyl ether. The organic layer was separated, washed twice with 200 mL of water and dried over MgSO₄. All the volatiles were removed under vacuum and the residue was precipitated from MeOH to give 3.82 g (6.11 mmol) of the final product with a yield of 55 %. It was a mixture of isomers in a ratio of about 17:83.
¹H NMR (CDCl₃, 500 MHz, 25 °C) (only the spectrum of major isomer is given): δ 7.67 (s, 1H), 7.65 (s, 1H), 7.46 (m, 4H, Ph), 7.35 (t, ³*J* = 7.3 Hz, 1H, Ph), 7.15 (s, 1H), 6.76 (s, 1H), 6.19 (s, 1H), 4.55 (d, ³*J* = 11.5 Hz, 1H), 3.58 (d, ³*J* = 11.5 Hz, 1H), 2.96 (m, 2H), 2.17 (m, 3H, C*H*₂CH₃), 1.74 (s, 8H), 1.43 (s, 3H, CH₃), 1.42 (s, 3H, CH₃), 1.37 (s, 3H, CH₃), 1.34 (s, 9H, tBu), 1.33 (s, 3H, CH₃), 1.26 (s, 3H, CH₃), 1.17 (s, 3H, CH₃), 1.02 (s, 3H, CH₃), 0.88 (s, 3H, CH₃), 0.81 (m, 3H, CH₂C*H*₃).
¹³C NMR (CDCl₃, 125 MHz, 25 °C) (only the spectrum of major isomer is given): δ 156.1, 144.9, 143.5, 143.4, 143.3, 143.2, 142.3, 140.5, 139.8, 138.7, 138.5, 128.9, 128.6, 126.2, 124.7, 124.5, 124.3, 116.4, 116.3, 49.8, 49.0, 41.6, 35.5, 35.4, 35.3 (three signals overlapped), 34.6, 34.5, 34.4 (two signals overlapped), 34.3, 32.3, 32.2, 32.1 (two signals overlapped), 31.9, 31.6, 31.5, 31.2, 31.1, 26.5, 26.4, 22.9, 22.8, 21.0, 14.7. Anal. Calcd for C₄₇H₆₀: C, 90.32; H, 9.68. Found: C, 90.88; H, 9.97.

### Polymerisation of propylene.

The polymerisation of propylene was carried out in toluene, under a pressure of 5 bars, with a catalyst concentration of 10 µmol.L⁻¹, with 5000 equiv (vs Zr) of methylaluminoxane (MAO) as activating agent and for a period of time of 30 minutes.

Other conditions are specified in Table I for each run. The activities and the properties of the resulting polymer are also summarised in Table I.

**Table I.**

| **Cat** | **Tp** (°C) | **mₚ** (g) | **Productivity** (g_{polym}/g_{cat}) | **Activity** (kg·mol⁻¹·h⁻¹) | **Tₘ** (°C) | **M_{w}** (×10³ g/mol | **PDI** | **[*m*]⁴** (%) | **1,2- insertion** (%) |
|---|---|---|---|---|---|---|---|---|---|
| **Ref** | 60 (61) | 1.39 | 1390 | 1710 | 154 | 166 | 2.4 | 95 | 100 |
| **Ref** | 60 (62) | 1.63 | 1810 | 2225 | n.d. | n.d. | n.d. | n.d. | n.d. |
| **Ref** | 60 (62) | 1.64 | 1490 | 1835 | n.d. | n.d. | n.d. | n.d. | n.d. |
| **Cat1** | 60 (65) | 4.48 | 4480 | 5940 | 156 | 200 | 2.6 | 96 | 100 |
| **Cat1** | 60 (63) | 8.44 | 8440 | 11190 | 154 | n.d. | n.d. | n.d. | n.d. |
| **Cat2** | 60 (63) | 5.89 | 5355 | 8170 | 152 | 174 | 2.3 | 93 | n.d. |
| **Cat2** | 60 (65) | 7.94 | 7225 | 11015 | 151 | n.d. | n.d. | n.d. | n.d. |
| **Cat2** | 60 (65) | 11.37 | 1135 | 17355 | n.d. | n.d. | n.d. | n.d. | n.d. |
| **Cat3** | 60 (60) | 0.92 | 830 | 1350 | 102 | 34 | 2.1 | 61 | n.d. |
| **Cat3** | 60 (59) | 0.94 | 780 | 1270 | 102 | n.d. | n.d. | n.d. | n.d. |
| **Cat4** | 60 (60) | 0.83 | 1235 | 825 | 131 | 95 | 2.2 | 80.8 | n.d. |
| **Cat4** | 60 (62) | 4.95 | 4950 | 7415 | 133 | n.d. | n.d. | n.d. | n.d. |

It can be observed that the catalyst system of the present invention has a very high activity, often higher than the reference system, particularly Cat2 that has an ethyl substituent on the cyclopentadienyl in position 5, vicinal to the bridge. It has also an excellent isotacticity, represented by [m]⁴. It can also be observed that the *tert*-butyl substituents at positions 3,6 on the fluorenyl lead to a much higher isotacticity than the same substituents at positions 2,7.

The main advantage of the present invention is that the catalyst component with the mono-aryl bridge are obtained easily and in very high yield as compared to the yields previously obtained with different bridges. This is due to the fact that they have an excellent crystallisation ability.

## Claims

1. A process for preparing a catalyst component of general formula
{R' (R^{b}₂-Flu) (R^{c}R^{d}C₅H₂)} MQ₂
that comprises the steps of:
a) reacting by nucleophilic addition, in a solvent, the adequate (R^{a}₂CR^{c}R^{d}fulvene), with the reagent [R^{b}₂-Flu ]⁻ [M']⁺;
b) hydrolysing and separating of the resulting ligand;
c) deprotonating the ligand of step b) with R"M" to prepare a dianion ligand;
d) carrying out the salt metathesis reaction in a solvent of the dianion ligand of step c) with MQ₄;
e) isolating of the mono-aryl-substituted methylene-bridged catalyst component by crystallisation,
wherein each R^{a} is independently selected from aromatic group, preferably a phenyl group, wherein M' is alkali metal such as Li, Na, K, wherein R" is an alkyl having from 1 to 6 carbon atoms, wherein M" is Li, Na or K, wherein M is a metal group 4 of the periodic Table, wherein Q is halogen or alkyl or benzyl, wherein R' is a mono-aryl-substituted methylene bridge, and wherein R^{b}, R^{c} and R^{d} are each independently selected from H or alkyl having from 1 to 12 carbon atoms or silyl groups substituted or unsubstituted,
and **characterised in that** the mono-aryl-substituted methylene-bridged catalyst component is crystallised with a yield of at least 70%.

2. The process of claim 1 wherein R' is a mono-phenyl-substituted bridge.

3. The process of any one of the preceding claims wherein both R^{b} are the same and are *tert*-butyl.

4. The process of any one of the preceding claims wherein substituents R^{b} are located at positions 3 and 6 on the fluorenyl group.

5. The process of any one of the preceding claims wherein R^{c} is methyl, ethyl, isopropyl or phenyl at position 2 and R^{d} is *tert*-butyl at position 4 on the cyclopentadienyl.

6. The process of claim 5 wherein R^{c} is ethyl.

7. The process of any one of the preceding claims wherein the solvent of both steps a) and d) is Et₂O.

8. The process of any one of the preceding claims wherein M' and M" are Li.

9. Use of the mono-aryl-substituted methylene-bridged catalyst component obtained by the process of any one of claims 1 to 8 in combination with an activating agent to prepare isotactic polypropylene with a higher activity than equivalent catalyst components carrying an ethylene, isopropylidene or silylene bridge.
